# EUROPEAN PATENT SPECIFICATION

(11) **EP 3 499 153 B1**
(45) Date of publication and mention of the grant of the patent: **25.03.2020**
(21) Application number: 18210902.5
(22) Date of filing: 06.12.2018
(51) Int. Cl.: F25B 49/00

(54) **COOLING SYSTEM**
KÜHLSYSTEM
SYSTÈME DE REFROIDISSEMENT

(30) Priority: 18.12.2017 US 201715844965
(43) Date of publication of application: 19.06.2019
(73) Proprietor: Heatcraft Refrigeration Products LLC, Stone Mountain, GA 30087 (US)
(72) Inventor: ZIMMERMANN, Augusto, Lilburn, Georgia 30047 (US)
(74) Representative: Barker Brettell LLP

(56) References cited:
- EP-A1- 2 629 026
- EP-A1- 2 647 920
- EP-A1- 3 029 397
- EP-A1- 3 147 595

## Description

### TECHNICAL FIELD

This disclosure relates generally to a cooling system, such as a refrigeration system.

### BACKGROUND

Cooling systems are used to cool spaces, such as residential dwellings, commercial buildings, and/or refrigeration units. These systems cycle a refrigerant (also referred to as charge) that is used to cool the spaces.

EP2647920A1 discloses an apparatus according the preamble of claim 1. This document shows an air conditioning apparatus capable of preventing an increase in refrigerant concentration inside a housing caused by refrigerant leakage, in which a refrigerant concentration device detects refrigerant leakage and a refrigerant passage is shut off when the detected value is higher than a predetermine value.

EP3147595A1 discloses a refrigeration cycle device and refrigeration cycle system, in which a refrigeration detection unit is configured to detect a concentration of leaked refrigerant and to output a detection signal to a controller, the controller operating an air-blowing fan when detecting leakage of the refrigerant.

### SUMMARY OF THE DISCLOSURE

In accordance with the invention there is provided an apparatus and method as defined by the appended claims.

This disclosure contemplates an unconventional cooling system that detects and responds to refrigerant leaks based on the detected concentrations of leaked refrigerant. The system includes a sensor that detects a concentration of leaked refrigerant in a space cooled by a load. When that detected concentration exceeds a first threshold, the system closes an expansion valve supplying refrigerant to a load to stop the flow of refrigerant to that load. If the leak continues and the detected concentration exceeds a second threshold, the system activates an exhaust system designed to evacuate the leaked refrigerant from the space. Certain embodiments will be described below.

According to an embodiment, an apparatus includes an expansion valve, a load, a sensor, an exhaust system, and a controller. The expansion valve cools a refrigerant. The load uses the refrigerant to cool a space. The sensor detects a concentration of the refrigerant in the space. The exhaust system evacuates the refrigerant from the space. The controller determines whether the detected concentration of the refrigerant in the space exceeds a first threshold and in response to a determination that the detected concentration of the refrigerant exceeds the first threshold, closes the expansion valve. The controller also determines whether the detected concentration of the refrigerant in the space exceeds a second threshold and in response to a determination that the detected concentration of the refrigerant exceeds the second threshold, activates the exhaust system.

According to another embodiment, a method includes cooling a refrigerant using an expansion valve and using the refrigerant to cool a space proximate a load. The method also includes detecting a concentration of the refrigerant in the space using a sensor. The method further includes determining whether the detected concentration of the refrigerant in the space exceeds a first threshold and in response to a determination that the detected concentration of the refrigerant exceeds the first threshold, closing the expansion valve. The method also includes determining whether the detected concentration of the refrigerant in the space exceeds a second threshold and in response to a determination that the detected concentration of the refrigerant exceeds the second threshold, activating an exhaust system to evacuate the refrigerant from the space.

According to yet another embodiment, a system includes a high side heat exchanger, an expansion valve, a load, a sensor, an exhaust system, and a controller. The high side heat exchanger removes heat from a refrigerant. The expansion valve cools the refrigerant from the high side heat exchanger. The load uses the refrigerant to cool a space. The sensor detects a concentration of the refrigerant in the space. The exhaust system evacuates the refrigerant from the space. The controller determines whether the detected concentration of the refrigerant in the space exceeds a first threshold and in response to a determination that the detected concentration of the refrigerant exceeds the first threshold, closes the expansion valve. The controller also determines whether the detected concentration of the refrigerant in the space exceeds a second threshold and in response to a determination that the detected concentration of the refrigerant exceeds the second threshold, activates the exhaust system.

Certain embodiments provide one or more technical advantages. For example, an embodiment detects and isolates refrigerant leaks by closing an expansion valve when a detected refrigerant concentration in a space exceeds a first threshold. As another example, an embodiment maintains the safety of a space by activating an exhaust system to evacuate leaked refrigerant from the space when the detected concentration of the leaked refrigerant exceeds a second threshold. In some embodiments, leaks in the cooling system are isolated when they occur, which may prevent the entire cooling system from being shut down to diagnose and repair the leak. Certain embodiments may include none, some, or all of the above technical advantages. One or more other technical advantages may be readily apparent to one skilled in the art from the figures, descriptions, and claims included herein.

### BRIEF DESCRIPTION OF THE DRAWINGS

For a more complete understanding of the present disclosure, reference is now made to the following description, taken in conjunction with the accompanying drawings, in which:
FIGURE 1 illustrates portions of an example cooling system;
FIGURE 2 illustrates portions of the cooling system of FIGURE 1; and
FIGURE 3 is a flowchart illustrating a method for operating the cooling system of FIGURE 1.

### DETAILED DESCRIPTION

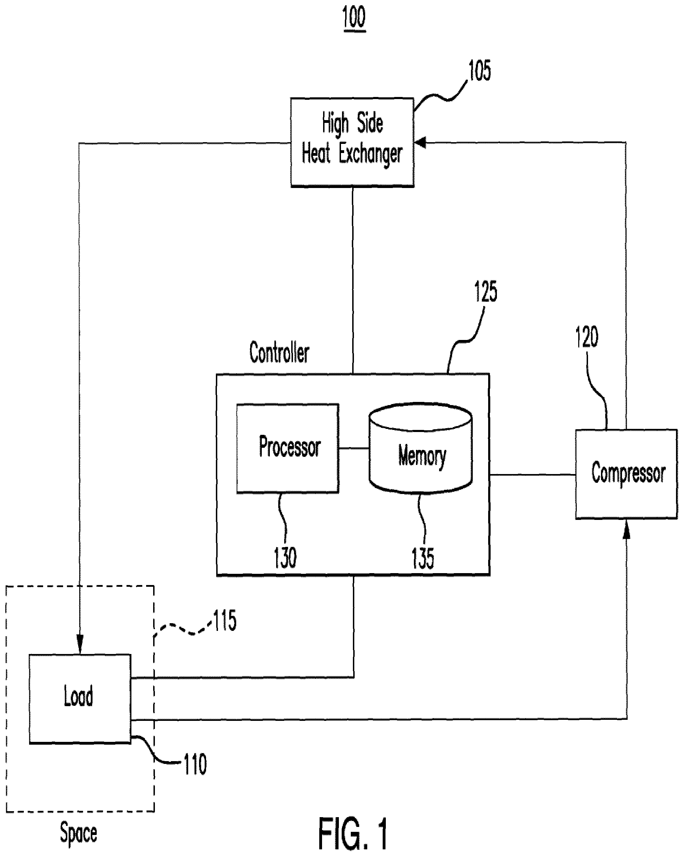

Embodiments of the present disclosure and its advantages are best understood by referring to FIGURES 1 through 3 of the drawings, like numerals being used for like and corresponding parts of the various drawings.

Cooling systems are used to cool spaces such as residential dwellings, commercial buildings and/or refrigeration units. These systems cycle a refrigerant that is used to cool the spaces. In a retail setting, the cooling system may include several cooling units such as for example freezer cases, freezer rooms, produce shelves, and refrigeration cases. Each unit uses the refrigerant to cool certain spaces to different temperatures.

In some instances, one or more of the units in a cooling system may leak refrigerant into the retail space. For example, piping in the unit or a joint in the piping may become loose and create a leak. In existing systems, the entire cooling system may need to be shut down to diagnose, locate, and/or repair the leak. Additionally, the retail space may need to be evacuated to prevent customers and employees from being harmed by the refrigerant leaking into the retail space. Thus, a simple refrigerant leak may result in substantial loss of revenue for the store.

This disclosure contemplates an unconventional cooling system that detects and responds to refrigerant leaks based on the detected concentrations of leaked refrigerant. The system includes a sensor that detects the concentration of leaked refrigerant in a space cooled by a load. When that detected concentration exceeds a first threshold, the system closes an expansion valve supplying refrigerant to the load to stop the flow of refrigerant to that load. If the leak continues and the detected concentration exceeds a second threshold, the system activates an exhaust system designed to evacuate the leaked refrigerant from the space. In this manner, when a leak is first detected, the leak may be isolated from the rest of the cooling system, which may cause the leak to stop. The leaking unit may then be inspected and repaired without shutting down the rest of the cooling system. If the leak continues after the unit is isolated, the exhaust system may expel the leaked refrigerant from the store. As a result, the store may not need to be evacuated even though there is a refrigerant leak. The cooling system will be described in more detail using FIGURES 1 through 3.

FIGURE 1 illustrates portions of an example cooling system 100. As shown in FIGURE 1, system 100 includes one or more high side heat exchangers 105, one or more loads 110, one or more compressors 120, and one or more controllers 125. Although not illustrated in FIGURE 1, system 100 may include any suitable component of a cooling system, such as for example expansion valves, flash tanks, oil separators, etc. In particular embodiments, system 100 isolates refrigerant leaks and if the leak does not stop, expels the refrigerant from system 100.

High side heat exchanger 105 may remove heat from a refrigerant. When heat is removed from the refrigerant, the refrigerant is cooled. This disclosure contemplates high side heat exchanger 105 being operated as a condenser, a fluid cooler, and/or a gas cooler. When operating as a condenser, high side heat exchanger 105 cools the refrigerant such that the state of the refrigerant changes from a gas to a liquid. When operating as a fluid cooler, high side heat exchanger 105 cools liquid refrigerant and the refrigerant remains a liquid. When operating as a gas cooler, high side heat exchanger 105 cools gaseous refrigerant and the refrigerant remains a gas. In certain configurations, high side heat exchanger 105 is positioned such that heat removed from the refrigerant may be discharged into the air. For example, high side heat exchanger 105 may be positioned on a rooftop so that heat removed from the refrigerant may be discharged into the air. As another example, high side heat exchanger 105 may be positioned external to a building and/or on the side of a building.

System 100 includes one or more loads 110 that use the refrigerant to cool a space 115. System 100 may include multiple loads 110 that each cool their own respective spaces 115. In a retail setting, loads 110 may be any cooling unit within the store such as for example produce shelves, refrigeration cases, freezer cases, and/or freezer rooms. Each of these units may cool a respective space 115 to a different temperature. For example, freezer cases and freezer rooms may cool a space 115 below freezing temperatures (e.g., at or below 32 degrees Fahrenheit). Refrigeration cases and produce shelves may cool a space 115 to temperatures above freezing (e.g., above 32 degrees Fahrenheit).

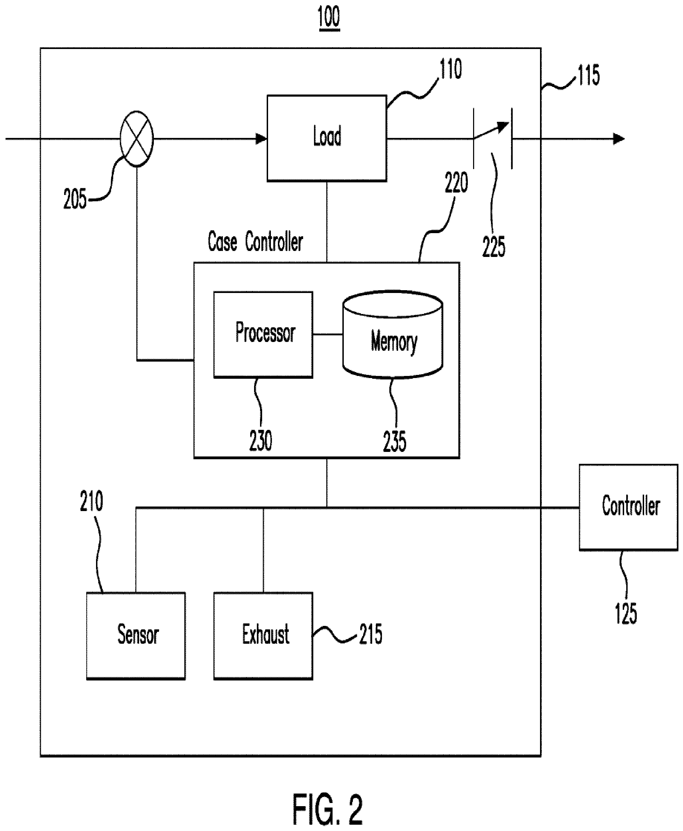

In some instances, leaks may occur in a load 110 of system 100. For example, piping carrying the refrigerant or a joint in the piping may come loose and spring a leak. When the leak occurs, refrigerant may leak into space 115 and out into the retail store. As described in more detail in FIGURE 2, system 100 can detect the leak and in response, isolate the load 110 and/or the space 115 where the leak is occurring. By isolating the leak, the leaking load 110 may be stopped to prevent the leak from continuing. If the leak continues then system 100 may activate an exhaust system in space 115 to expel leaked refrigerant from space 115 and from the retail store. As a result, system 100 may stop refrigerant leaks without shutting down the entire system 100. Additionally, when leaks occur, they may be located, diagnosed, and repaired without evacuating the store.

Refrigerant may flow from load 110 to compressors 120. This disclosure contemplates system 100 including any number of compressors 120. Compressor 120 may compress the refrigerant and increase the pressure of the refrigerant. As a result, the heat in the refrigerant may become concentrated and the refrigerant may become a high pressure gas, which may make it easier for high side heat exchanger 105 to remove heat from the refrigerant. Compressor 120 directs the compressed refrigerant to high side heat exchanger 105.

Controller 125 controls the operation of the various components of system 100. For example, controller 125 can activate one or more of high side heat exchanger 105, load 110, and compressor 120. Controller 125 may also deactivate these components. Controller 125 may activate and/or deactivate any component of system 100. As shown in FIGURE 1, controller 125 includes a processor 130 and a memory 135. This disclosure contemplates processor 130 and memory 135 being configured to perform any of the functions of controller 125 described herein.

Processor 130 is any electronic circuitry, including, but not limited to microprocessors, application specific integrated circuits (ASIC), application specific instruction set processor (ASIP), and/or state machines, that communicatively couples to memory 135 and controls the operation of controller 125. Processor 130 may be 8-bit, 16-bit, 32-bit, 64-bit or of any other suitable architecture. Processor 130 may include an arithmetic logic unit (ALU) for performing arithmetic and logic operations, processor registers that supply operands to the ALU and store the results of ALU operations, and a control unit that fetches instructions from memory and executes them by directing the coordinated operations of the ALU, registers and other components. Processor 130 may include other hardware and software that operates to control and process information. Processor 130 executes software stored on memory to perform any of the functions described herein. Processor 130 controls the operation and administration of controller 125 by processing information received from various components of system 100. Processor 130 may be a programmable logic device, a microcontroller, a microprocessor, any suitable processing device, or any suitable combination of the preceding. Processor 130 is not limited to a single processing device and may encompass multiple processing devices.

Memory 135 may store, either permanently or temporarily, data, operational software, or other information for processor 130. Memory 135 may include any one or a combination of volatile or non-volatile local or remote devices suitable for storing information. For example, memory 135 may include random access memory (RAM), read only memory (ROM), magnetic storage devices, optical storage devices, or any other suitable information storage device or a combination of these devices. The software represents any suitable set of instructions, logic, or code embodied in a computer-readable storage medium. For example, the software may be embodied in memory 135, a disk, a CD, or a flash drive. In particular embodiments, the software may include an application executable by processor 130 to perform one or more of the functions of controller 125 described herein.

FIGURE 2 illustrates portions of the cooling system 100 of FIGURE 1. As shown in FIGURE 2, a load 110 is used to cool a space 115. Additionally, system 100 includes one or more expansion valves 205, one or more sensors 210, one or more exhaust systems 215, one or more case controllers 220, and one or more check valves 225. FIGURE 2 illustrates these components as being located within space 115. This disclosure contemplates that these components may be located outside space 115. In particular embodiments, these components may operate to isolate refrigerant leaks so that they may be located, diagnosed, and repaired without shutting down the entirety of system 100.

Expansion valve 205 is used to cool refrigerant entering load 110. Expansion valve 205 may receive refrigerant from any component of system 100 such as for example high side heat exchanger 105 and/or a flash tank. Expansion valve 205 reduces the pressure and therefore the temperature of the refrigerant. Expansion valve 205 reduces pressure from the refrigerant flowing into the expansion valve 205. The temperature of the refrigerant may then drop as pressure is reduced. As a result, refrigerant entering expansion valve 205 may be cooler when leaving expansion valve 205. The refrigerant leaving expansion valve 205 is fed to load 110.

When a refrigerant leak is detected, expansion valve 205 may be closed to stop refrigerant from flowing to load 110. As a result, load 110 may shut down. Load 110 and the leak are then effectively isolated from the rest of system 100. The leak may then be located, diagnosed, and repaired by locating load 110 and inspecting the piping around load 110 for leaks. Any leaks may then be patched and/or repaired before activating load 110 and opening expansion valve 205.

Sensor 210 may detect concentrations of refrigerant in system 100 such as for example in space 115. Sensor 210 may report any detected concentrations of refrigerant to controller 125. When sensor 210 reports a concentration of refrigerant in space 115 that exceeds a first threshold, controller 125 may determine that a refrigerant leak is occurring. In response, controller 125 may instruct case controller 220 to close expansion valve 205. As a result, case controller 220 may close expansion valve 205 and shut down load 110, thereby effectively isolating and stopping the refrigerant leak. If the refrigerant leak continues, sensor 210 may detect a concentration of refrigerant that exceeds a second threshold. The second threshold is higher than the first threshold. In response, controller 125 may activate exhaust system 215. This disclosure contemplates sensor 210 being configured to detect any concentration of refrigerant in space 115. Additionally, this disclosure contemplates the first and second thresholds being any value. Furthermore, this disclosure contemplates controller 125 performing any action in response to any number of thresholds of detected concentrations of refrigerants. In particular embodiments, the first threshold is 1,000 parts per million and the second threshold is 5,000 parts per million.

Exhaust system 215 may include any number of vents, fans, exhaust tubing, and any other appropriate components. Exhaust system 215 may operate these components (e.g., activating fans) to expel leaked refrigerant from space 115 and cooling system 100. In certain embodiments, when sensor 210 detects a particular concentration of refrigerant in space 115, controller 125 may determine that the detected concentration is above a second threshold. In response, controller 125 may activate exhaust system 215 to expel refrigerant from space 115. In response, exhaust system 215 may activate (e.g., activating a fan) to expel refrigerant from space 115. As a result, exhaust system 215 may remove refrigerant from space 115 and keep a retail space safe. The leak may then be located, diagnosed, and/or repaired without needing to evacuate the retail space.

Case controller 220 may control the operation of various components of system 100. For example, case controller 220 may activate and/or deactivate expansion valve 205 and/or load 110. When sensor 210 detects a particular concentration of refrigerant in space 115, controller 125 may determine that the detected concentration exceeds a first threshold. In response, controller 125 may instruct case controller 220 to close expansion valve 205 and/or to deactivate load 110. In response, case controller 220 may close expansion valve 205 and/or deactivate load 110 to isolate and potentially stop the leak. When the leak has been repaired, case controller 220 may instruct expansion valve 205 to open and load 110 to activate. This disclosure contemplates case controller 220 being located in space 115. In some embodiments, case controller 220 may form a part of controller 125. This disclosure also contemplates case controller 220 being located with controller 125 and/or being a subcomponent of controller 125. This disclosure also contemplates case controller 220 being a distributed controller along with controller 125. Case controller 220 may operate independently and separately from controller 125 or case controller 220 may operate in conjunction with controller 125. As shown in FIGURE 2, case controller 220 includes a processor 230 and memory 235. This disclosure contemplates processor 230 and memory 235 being configured to perform any of the functions of case controller 220.

Processor 230 is any electronic circuitry, including, but not limited to microprocessors, application specific integrated circuits (ASIC), application specific instruction set processor (ASIP), and/or state machines, that communicatively couples to memory 235 and controls the operation of case controller 220. Processor 230 may be 8-bit, 16-bit, 32-bit, 64-bit or of any other suitable architecture. Processor 230 may include an arithmetic logic unit (ALU) for performing arithmetic and logic operations, processor registers that supply operands to the ALU and store the results of ALU operations, and a control unit that fetches instructions from memory and executes them by directing the coordinated operations of the ALU, registers and other components. Processor 230 may include other hardware and software that operates to control and process information. Processor 230 executes software stored on memory 235 to perform any of the functions described herein. Processor 230 controls the operation and administration of case controller 220 by processing information received from various components of system 100. Processor 230 may be a programmable logic device, a microcontroller, a microprocessor, any suitable processing device, or any suitable combination of the preceding. Processor 230 is not limited to a single processing device and may encompass multiple processing devices.

Memory 235 may store, either permanently or temporarily, data, operational software, or other information for processor 230. Memory 235 may include any one or a combination of volatile or non-volatile local or remote devices suitable for storing information. For example, memory 235 may include random access memory (RAM), read only memory (ROM), magnetic storage devices, optical storage devices, or any other suitable information storage device or a combination of these devices. The software represents any suitable set of instructions, logic, or code embodied in a computer-readable storage medium. For example, the software may be embodied in memory 235, a disk, a CD, or a flash drive. In particular embodiments, the software may include an application executable by processor 230 to perform one or more of the functions of case controller 220 described herein.

Check valve 225 prevents refrigerant from flowing back into load 110 when expansion valve 205 is closed and when load 110 is deactivated. When load 110 is deactivated and expansion valve 205 is closed, a drop in pressure may occur in load 110, which effectively creates a suction at the discharge of load 110. If check valve 225 is not present, then refrigerant from other components of system 100 may be sucked into load 110 through the discharge of load 110. Check valve 225 prevents refrigerant from backflowing through the discharge of load 110, which protects load 110 from damage. In particular embodiments, instead of using a check valve 225, a full port solenoid valve may be used instead.

In some embodiments, when sensor 210 detects a particular concentration of refrigerant, controller 125 may determine that the detected concentration exceeds a particular threshold such as for example a second threshold. In response controller 125 may activate an alarm to alert individuals in the retail space that a refrigerant leak is occurring. The alarm may produce a visible and/or audible signal that alerts others of the refrigerant leak. In some embodiments, the visual and audible signals may also alert others of the location of the leak such as for example in space 115.

In particular embodiments, system 100 includes a pressure transducer that converts a pressure of the refrigerant to an electric signal. For example, the pressure transducer may be located near load 110 and it may respond to a pressure of the refrigerant at load 110. The pressure transducer may convert a pressure of the refrigerant at load 110 into an electric signal and communicate that signal to controller 125. Controller 125 may determine that a refrigerant leak is occurring in load 110 based on the electric signal. For example, when a refrigerant leak is occurring, the electric signal communicated by the pressure transducer will indicate that the pressure of the refrigerant at load 110 is decreasing. Controller 125 may determine based on that electric signal that a leak is occurring and instruct case controller 220 to close expansion valve 205, deactivate load 110, and/or activate exhaust system 215.

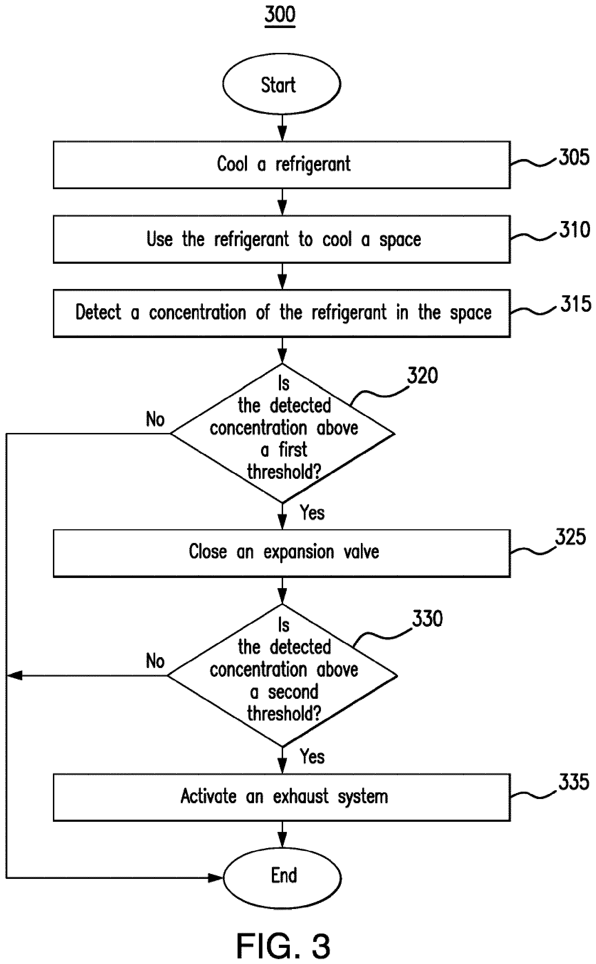

FIGURE 3 is a flowchart illustrating a method 300 for operating the cooling system 100 of FIGURE 1. In particular embodiments, various components of system 100 perform the steps of method 300. By performing method 300 refrigerant leaks may be isolated, located, and repaired without shutting down the entire system 100 and without evacuating a retail space served by cooling system 100.

A high side heat exchanger may begin by cooling a refrigerant in step 305. In step 310, a load uses the refrigerant to cool a space. A sensor detects a concentration of the refrigerant in the space in step 315. In step 320, a controller determines whether the detected concentration is above a first threshold. If the detected concentration is not above the first threshold, method 300 concludes. If the detected concentration is above the first threshold, then the controller may close an expansion valve in step 325. For example, the controller may instruct a case controller to close the expansion valve. In step 330, the controller then determines whether a detected concentration is above a second threshold. If the detected concentration is not above the second threshold, method 300 concludes. If the detected concentration is above the second threshold, then the controller activates an exhaust system in step 335. By activating the exhaust system, the leaked refrigerant may be expelled from the space. Modifications, additions, or omissions may be made to method 300 depicted in FIGURE 3. Method 300 may include more, fewer, or other steps. For example, steps may be performed in parallel or in any suitable order. While discussed as system 100 (or components thereof) performing the steps, any suitable component of system 100 may perform one or more steps of the method.

## Claims

1. An apparatus (100) comprising:
an expansion valve (205) configured to cool a refrigerant;
a load (110) configured to use the refrigerant to cool a space (115);
a sensor (210) configured to detect a concentration of the refrigerant in the space;
an exhaust system (215) configured to evacuate the refrigerant from the space (115); and
a controller (125) configured to:
determine whether the detected concentration of the refrigerant in the space (115) exceeds a first threshold;
**characterized in that** the controller is further configured to:
in response to a determination that the detected concentration of the refrigerant exceeds the first threshold, close the expansion valve (205);
determine whether the detected concentration of the refrigerant in the space (115) exceeds a second threshold; and
in response to a determination that the detected concentration of the refrigerant exceeds the second threshold, activate the exhaust system (215).

2. The apparatus (100) of Claim 1, wherein the controller (125) is further configured to activate an alarm in response to the determination that the detected concentration of the refrigerant exceeds the second threshold.

3. The apparatus (100) of Claim 1 or Claim 2, further comprising a check valve (225) coupled to a discharge of the load (110) and configured to prevent the refrigerant from backflowing into the load (110).

4. The apparatus (100) of Claim 1 or Claim 2, further comprising a full-port solenoid valve coupled to a discharge of the load (110) and configured to prevent the refrigerant from backflowing into the load (110).

5. The apparatus (100) of any of Claims 1 to 4, wherein the first threshold is 1000 parts per million and the second threshold is 5000 parts per million.

6. The apparatus (100) of any of Claims 1 to 5, further comprising a pressure transducer configured to convert a pressure of the refrigerant at the load to an electric signal, the controller further configured to determine that a refrigerant leak is occurring in the load based on the electric signal.

7. The apparatus (100) of Claim 6, wherein the electric signal indicates that the pressure of the refrigerant at the load is decreasing.

8. A method (300) comprising:
cooling (305) a refrigerant using an expansion valve (205);
using (310) the refrigerant to cool a space (115) proximate a load (110);
detecting (315) a concentration of the refrigerant in the space (115) using a sensor (210);
determining (320) whether the detected concentration of the refrigerant in the space exceeds a first threshold; **characterized by**
in response to a determination that the detected concentration of the refrigerant exceeds the first threshold, closing (325) the expansion valve (205);
determining (330) whether the detected concentration of the refrigerant in the space (115) exceeds a second threshold; and
in response to a determination that the detected concentration of the refrigerant exceeds the second threshold, activating (335) an exhaust system (215) to evacuate the refrigerant from the space (115).

9. The method of Claim 8, further comprising activating an alarm in response to the determination that the detected concentration of the refrigerant exceeds the second threshold.

10. The method of Claim 8 or Claim 9, further comprising preventing the refrigerant from backflowing into the load (110) using a check valve (225) coupled to a discharge of the load (110).

11. The method of Claim 8 or Claim 9, further comprising preventing the refrigerant from backflowing into the load (110) using a full-port solenoid valve coupled to a discharge of the load (110).

12. The method of any of Claims 8 to 11, wherein the first threshold is 1000 parts per million and the second threshold is 5000 parts per million.

13. The method of any of Claims 8 to 12, further comprising:
converting, by a pressure transducer, a pressure of the refrigerant at the load (110) to an electric signal; and
determining that a refrigerant leak is occurring in the load (110) based on the electric signal.

14. The method of Claim 13, wherein the electric signal indicates that the pressure of the refrigerant at the load is decreasing.

15. A system (100) comprising:
a high side heat exchanger (105) configured to remove heat from a refrigerant; and
an apparatus according to any of Claims 1 to 7,
wherein the expansion valve (205) is configured to cool the refrigerant from the high side heat exchanger (105).

## Patentansprüche

1. Gerät (100), das Folgendes umfasst:
ein Expansionsventil (205), das konfiguriert ist, um ein Kältemittel zu kühlen;
eine Last (110), die konfiguriert ist, um das Kältemittel zum Kühlen eines Raums (115) zu verwenden;
einen Sensor (210), der konfiguriert ist, um eine Konzentration des Kältemittels in dem Raum zu erfassen;
ein Ablasssystem (215), das konfiguriert ist, um das Kältemittel aus dem Raum (115) abzulassen; und
eine Steuervorrichtung (125), die konfiguriert ist, um:
zu bestimmen, ob die erfasste Konzentration des Kältemittels in dem Raum (115) einen ersten Schwellenwert überschreitet;
**dadurch gekennzeichnet, dass** die Steuervorrichtung weiter konfiguriert ist, um:
als Reaktion auf eine Bestimmung, dass die erfasste Konzentration des Kältemittels den ersten Schwellenwert überschreitet, das Expansionsventil (205) zu schließen;
zu bestimmen, ob die erfasste Konzentration des Kältemittels in dem Raum (115) einen zweiten Schwellenwert überschreitet; und
als Reaktion auf eine Bestimmung, dass die erfasste Konzentration des Kältemittels den zweiten Schwellenwert überschreitet, das Ablasssystem (215) zu aktivieren.

2. Gerät (100) nach Anspruch 1, wobei die Steuervorrichtung (125) weiter konfiguriert ist, um einen Alarm als Reaktion auf die Bestimmung, dass die erfasste Konzentration des Kältemittels den zweiten Schwellenwert überschreitet, zu aktivieren.

3. Gerät (100) nach Anspruch 1 oder Anspruch 2, das weiter ein Rückschlagventil (225) umfasst, das mit einem Abfluss der Last (110) gekoppelt und konfiguriert ist, um zu verhindern, dass das Kältemittel in die Last (110) zurückfließt.

4. Gerät (100) nach Anspruch 1 oder Anspruch 2, das weiter ein Magnetventil mit vollständiger Öffnung umfasst, das mit einem Abfluss der Last (110) gekoppelt und konfiguriert ist, um zu verhindern, dass das Kältemittel in die Last (110) zurückfließt.

5. Gerät (100) nach einem der Ansprüche 1 bis 4, wobei der erste Schwellenwert 1000 Teile pro Million beträgt, und der zweite Schwellenwert 5000 Teile pro Million beträgt.

6. Gerät (100) nach einem der Ansprüche 1 bis 5, das weiter einen Druckgeber umfasst, der konfiguriert ist, um einen Druck des Kältemittels an der Last in ein elektrisches Signal umzuwandeln, wobei die Steuervorrichtung weiter konfiguriert ist, um basierend auf dem elektrischen Signal zu bestimmen, dass ein Kältemitteleck in der Last auftritt.

7. Gerät (100) nach Anspruch 6, wobei das elektrische Signal angibt, dass der Druck des Kältemittels an der Last sinkt.

8. Verfahren (300), das Folgendes umfasst:
Kühlen (305) eines Kältemittels unter Verwenden eines Expansionsventils (205);
Verwenden (310) des Kältemittels, um einen Raum (115) nahe einer Last (110) zu kühlen;
Erfassen (315) einer Konzentration des Kältemittels in dem Raum (115) unter Verwenden eines Sensors (210);
Bestimmen (320), ob die erfasste Konzentration des Kältemittels in dem Raum einen ersten Schwellenwert überschreitet; **dadurch gekennzeichnet, dass**
als Reaktion auf eine Bestimmung, dass die erfasste Konzentration des Kältemittels den ersten Schwellenwert überschreitet, das Expansionsventil (205) geschlossen wird (325);
Bestimmen (330), ob die erfasste Konzentration des Kältemittels in dem Raum (115) einen zweiten Schwellenwert überschreitet; und
als Reaktion auf ein Bestimmen, dass die erfasste Konzentration des Kältemittels den zweiten Schwellenwert überschreitet, Aktivieren (335) eines Ablasssystems (215), um das Kältemittel aus dem Raum (115) abzulassen.

9. Verfahren nach Anspruch 8, das weiter das Aktivieren eines Alarms als Reaktion auf das Bestimmen, dass die erfasste Konzentration des Kältemittels den zweiten Schwellenwert überschreitet, umfasst.

10. Verfahren nach Anspruch 8 oder Anspruch 9, das weiter das Verhindern des Zurückfließens des Kältemittels in die Last (110) unter Verwenden eines Rückschlagventils (225), das mit einem Abfluss der Last (110) gekoppelt ist, umfasst.

11. Verfahren nach Anspruch 8 oder Anspruch 9, das weiter das Verhindern des Zurückfließens des Kältemittels in die Last (110) unter Verwenden eines Magnetventils mit vollständiger Öffnung, das mit einem Abfluss der Last (110) gekoppelt ist, umfasst.

12. Verfahren nach einem der Ansprüche 8 bis 11, wobei der erste Schwellenwert 1000 Teile pro Million beträgt, und der zweite Schwellenwert 5000 Teile pro Million beträgt.

13. Verfahren nach einem der Ansprüche 8 bis 12, das weiter Folgendes umfasst:
Umwandeln durch einen Druckgeber eines Drucks des Kältemittels an der Last (110) in ein elektrisches Signal; und
basierend auf dem elektrischen Signal Bestimmen, dass ein Kältemittelleck in der Last (110) auftritt.

14. Verfahren nach Anspruch 13, wobei das elektrische Signal angibt, dass der Druck des Kältemittels an der Last sinkt.

15. System (100), das Folgendes umfasst:
einen Wärmetauscher an der hohen Seite (105), der konfiguriert ist, um Hitze aus einem Kältemittel zu entfernen; und
ein Gerät nach einem der Ansprüche 1 bis 7,
wobei das Expansionsventil (205) konfiguriert ist, um das Kältemittel von der hohen Seite des Wärmetauschers (105) zu kühlen.

## Revendications

1. Appareil (100) comprenant :
une vanne d'expansion (205) configurée pour refroidir un réfrigérant ;
une charge (110) configurée pour utiliser le réfrigérant pour refroidir un espace (115) ;
un capteur (210) configuré pour détecter une concentration du réfrigérant dans l'espace ;
un système d'échappement (215) configuré pour évacuer le réfrigérant de l'espace (115) ; et
un organe de commande (125) configuré pour :
déterminer si la concentration détectée du réfrigérant dans l'espace (115) dépasse ou non un premier seuil ;
**caractérisé en ce que** l'organe de commande est en outre configuré pour :
en réponse à une détermination que la concentration détectée du réfrigérant dépasse le premier seuil, fermer la vanne d'expansion (205) ;
déterminer si la concentration détectée du réfrigérant dans l'espace (115) dépasse ou non un second seuil ; et
en réponse à une détermination que la concentration détectée du réfrigérant dépasse le second seuil, activer le système d'échappement (215).

2. Appareil (100) selon la revendication 1, dans lequel l'organe de commande (125) est en outre configuré pour activer une alarme en réponse à la détermination que la concentration détectée du réfrigérant dépasse le second seuil.

3. Appareil (100) selon la revendication 1 ou 2, comprenant en outre un clapet antiretour (225) couplé à une décharge de la charge (110) et configuré pour empêcher le retour du réfrigérant dans la charge (110).

4. Appareil (100) selon la revendication 1 ou 2, comprenant en outre une électrovanne à passage intégral couplée à une décharge de la charge (110) et configurée pour empêcher le retour du réfrigérant dans la charge (110).

5. Appareil (100) selon l'une quelconque des revendications 1 à 4, dans lequel le premier seuil est 1000 parties par million et le second seuil est 5000 parties par million.

6. Appareil (100) selon l'une quelconque des revendications 1 à 5, comprenant en outre un transducteur de pression configuré pour convertir une pression du réfrigérant à la charge en un signal électrique, l'organe de commande étant en outre configuré pour déterminer qu'une fuite de réfrigérant survient dans la charge sur la base du signal électrique.

7. Appareil (100) selon la revendication 6, dans lequel le signal électrique indique que la pression du réfrigérant à la charge diminue.

8. Procédé (300) comprenant :
le refroidissement (305) d'un réfrigérant en utilisant une vanne d'expansion (205) ;
l'utilisation (310) du réfrigérant pour refroidir un espace (115) à proximité d'une charge (110) ;
la détection (315) d'une concentration du réfrigérant dans l'espace (115) en utilisant un capteur (210) ;
la détermination (320) si la concentration détectée du réfrigérant dans l'espace dépasse ou non un premier seuil ; **caractérisé par**
en réponse à une détermination que la concentration détectée du réfrigérant dépasse le premier seuil, la fermeture (325) de la vanne d'expansion (205) ;
la détermination (330) si la concentration détectée du réfrigérant dans l'espace (115) dépasse ou non un second seuil ; et
en réponse à une détermination que la concentration détectée du réfrigérant dépasse le second seuil, l'activation (335) d'un système d'échappement (215) pour évacuer le réfrigérant de l'espace (115).

9. Procédé selon la revendication 8, comprenant en outre l'activation d'une alarme en réponse à la détermination que la concentration détectée du réfrigérant dépasse le second seuil.

10. Procédé selon la revendication 8 ou 9, comprenant en outre la prévention du retour du réfrigérant dans la charge (110) en utilisant un clapet antiretour (225) couplé à une décharge de la charge (110).

11. Procédé selon la revendication 8 ou 9, comprenant en outre la prévention du retour du réfrigérant dans la charge (110) en utilisant une électrovanne à passage intégral couplée à une décharge de la charge (110).

12. Procédé selon l'une quelconque des revendications 8 à 11, dans lequel le premier seuil est 1000 parties par million et le second seuil est 5000 parties par million.

13. Procédé selon l'une quelconque des revendications 8 à 12, comprenant en outre :
la conversion, par un transducteur de pression, d'une pression du réfrigérant à la charge (110) en un signal électrique ; et
la détermination qu'une fuite de réfrigérant survient dans la charge (110) sur la base du signal électrique.

14. Procédé selon la revendication 13, dans lequel le signal électrique indique que la pression du réfrigérant à la charge diminue.

15. Système (100) comprenant :
un échangeur de chaleur côté haut (105) configuré pour enlever une chaleur d'un réfrigérant ; et
un appareil selon l'une quelconque des revendications 1 à 7 ;
dans lequel la vanne d'expansion (205) est configurée pour refroidir le réfrigérant de l'échangeur de chaleur côté haut (105).
